# FASCICULE DE BREVET EUROPEEN

(11) **EP 0 369 903 B1**
(45) Date de publication et mention de la délivrance du brevet: **25.08.1993**
(21) Numéro de dépôt: 89420439.5
(22) Date de dépôt: 14.11.1989
(51) Int. Cl.: B62K 19/22, F16B 11/00, F16B 7/00

(54) **Procédé de raccordement et d'assemblage d'éléments tubulaires, notamment pour réaliser un cadre de bicyclette et nouveau type de cadre ainsi obtenu**
Verbindungs- und Zusammensetzungverfahren von Rohrelementen, insbesondere zum Bau eines Fahrradrahmens und der damit gebaute neue Rahmen
Process for the connexion and assembly of tubular elements, particularly for producing a bicycle frame, and the frame produced thereby

(30) Priorité: 17.11.1988 FR 8815200
(43) Date de publication de la demande: 23.05.1990
(73) Titulaire: TVT COMPOSITE, F-69400 Villefranche sur Saone (FR)
(72) Inventeur: Darrin, Alain, F-69650 Saint Germain au Mont d'Or (FR)
(74) Mandataire: Laurent, Michel

(56) Documents cités:
- FR-A- 2 331 475
- FR-A- 2 523 541
- FR-A- 2 600 031

## Description

Dans le domaine technique de l'assemblage ou du raccordement d'éléments tubulaires, il a été proposé depuis fort longtemps de substituer aux techniques classiques d'assemblage faisant appel au soudage, emboitement forcé, vissage.., des techniques de collage, comme cela ressort notamment du brevet français 2 142 171, du brevet britannique 575,144, et des brevets français 2 331 475 et 2 373 436.

Ces techniques de collage sont particulièrement appréciées dans tous les cas où l'on souhaite obtenir un allègement et sont notamment utilisées lorsque l'on souhaite raccorder entre eux plusieurs tubes au moyen de manchons de raccordement permettant d'obtenir une structure dans laquelle les tubes sont orientés différemment les uns par rapport aux autres, tels que notamment pour former un cadre de bicyclette.

Dans la suite de la description, l'invention sera décrite plus particulièrement pour cette application, mais elle pourrait être éventuellement mise en oeuvre dans d'autres domaines où se posent des problèmes similaires.

Ainsi que cela ressort des documents précités, la réalisation de cadres de bicyclettes par assemblage et collage d'éléments tubulaires au moyen de manchons de raccordement est connue depuis fort longtemps.

Compte tenu du développement des colles, la liaison entre les éléments tubulaires et les manchons présente en général une résistance suffisante. Cependant, en ce qui concerne le cadre d'une bicyclette, certaines zones sont soumises à des efforts très violents, répétitifs et plus particulièrement au niveau du raccord supportant le pédalier. En effet, dans cette zone, par suite des efforts de traction qui s'exercent, il peut se produire, à la longue, un jeu voire même un arrachement du tube du raccord de liaison.

Or on a trouvé, et c'est ce qui fait l'objet de la présente invention, qu'il était possible, de manière simple et efficace, de résoudre ce problème et d'éliminer pratiquement tout risque d'arrachement au niveau de la zone de jonction du tube et de l'élément de raccordement.

D'une manière générale, l'invention concerne un perfectionnement apporté au procédé de raccordement et d'assemblage d'éléments tubulaires, selon lequel la liaison des différents tubes entre eux et obtenue au moyen de raccords ou manchons, les extrémités de ces deux éléments étant emboitées l'une à l'intérieur de l'autre et la liaison étant obtenue par collage, et selon lequel après emmanchement des deux pièces l'une à l'intérieur de l'autre et avant prise de la colle, on monte un raccord additionnel dont une partie vient plaquer contre une surface d'un élément, et dont l'autre partie vient se visser avec le second élément, la prise définitive de la colle étant réalisée après mise en place de cet élément de jonction additionnel, et il se caractérise en ce que ledit raccord additionnel est introduit à l'intérieur de l'un des éléments, une partie du raccord venant plaquer contre une surface à l'intérieur de cet élément et l'autre partie venant se visser à l'intérieur du second élément.

Par "placage" au sens de la présente invention, on entend non seulement le cas où les surfaces sont véritablement en contact mutuel, mais également celui où un léger jeu subsiste entre lesdites surfaces, par exemple par suite des tolérances de fabrication, ce jeu étant comblé par la colle qui flue lors de la mise en place du raccord additionnel.

De préférence, notamment lorsque les tubes sont réalisés à partir de "matériaux composites" tels que ceux faisant l'objet du brevet français 2 546 473, le raccord additionnel est introduit à l'intérieur de l'élément tubulaire et vient se visser à l'intérieur du raccord proprement dit. Dans cette forme de réalisation, notamment lorsque le tube est emmanché à l'extérieur du raccord, cet emmanchement pouvant être soit cylindrique soit légèrement conique, la tête de l'élément de raccord additionnel vient plaquer contre une surface formant butée en forme de plan incliné (et à la limite orthogonal à l'axe d'assemblage), ce qui renforce encore la liaison entre les deux éléments.

Par ailleurs, si les parties filetées du raccord additionnel et de la zone correspondant dans laquelle est réalisé le vissage sont de préférence cylindriques, elles pourraient éventuellement être légèrement coniques. De plus, la surface de la tête de l'élément de raccord additionnel est de préférence lisse, mais pourrait éventuellement avoir un état de surface différent, par exemple présenter des stries, des parties en relief et en creux, en vue de renforcer la liaison entre les éléments.

Grâce à un tel procédé de fabrication, on obtient une liaison parfaite et indétériorable entre le raccord et le tube fixé à ce dernier. Un tel procédé est particulièrement adapté pour réaliser la jonction d'éléments tubulaires d'un cadre de bicyclette avec le raccord de pédalier, zone qui est soumise à des contraintes très importantes en cours d'utilisation. Dans une telle application, l'élément de raccordement additionnel est introduit à l'intérieur des tubes du cadre, prend appui contre une couronne périphérique de plus faible diamètre que le diamètre interne du tube, et vient se visser à l'intérieur d'une partie complémentaire prévue dans les raccords du boitier de pédalier.

L'invention et les avantages qu'elle apporte seront cependant mieux compris grâce aux exemples de réalisation donnés ci-après à titre indicatif, mais non limitatif et qui sont illustrés dans les schémas annexés dans lesquels :
- la figure 1 est une vue schématique de côté d'un boitier de pédalier d'un cadre de bicyclette réalisé conformément au procédé selon l'invention ;
- les figures 2,3 et 4 sont des vues en coupe longitudinales illustrant différents modes de mise en oeuvre du procédé conforme à l'invention ;
- la figure 5 illustre une variante selon laquelle l'élément additionnel est introduit non pas à l'intérieur du tube, mais à l'intérieur du raccord et vient se visser à l'intérieur du tube.

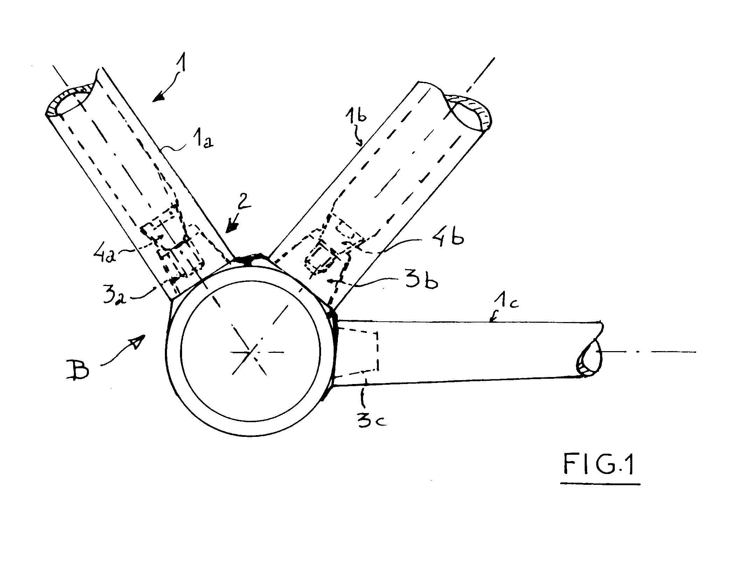

Si l'on se reporte aux schémas annexés, l'invention porte donc sur un perfectionnement apporté au procédé de raccordement et d'assemblage d'éléments tubulaires, désignés par la référence générale (1) dans la suite de la description, procédé dans lequel la liaison des différent tubes entre eux est obtenue au moyen de raccords ou manchons, désignés par la référence générale (2). Les extrémités de ces deux éléments sont imbriquées l'une à l'intérieur de l'autre et la liaison est obtenue par collage. Un tel procédé pourrait être utilisé, ainsi que cela ressort de la figure 1, pour réaliser la jonction des différents tubes (1a,1b,1c) avec le boitier B de pédalier d'un cadre de bicyclette.

Conformément à l'invention, pour la liaison des différents tubes (1a,1b,1c) avec les portées complémentaires (3a,3b,3c) que comporte le boitier, après dépôt de colle sur l'une ou l'autre des surfaces destinées à venir en contact, on introduit à l'intérieur de l'un des éléments, dans le cas présent à l'intérieur de chaque tube, un raccord additionnel (4a,4b,4c) dont une partie vient plaquer contre l'intérieur de la surface de l'élément à l'intérieur duquel il est introduit, et dont l'autre partie vient se visser à l'intérieur du second élément, la prise définitive de la colle étant réalisée après mise en place de cet élément de jonction additionnel.

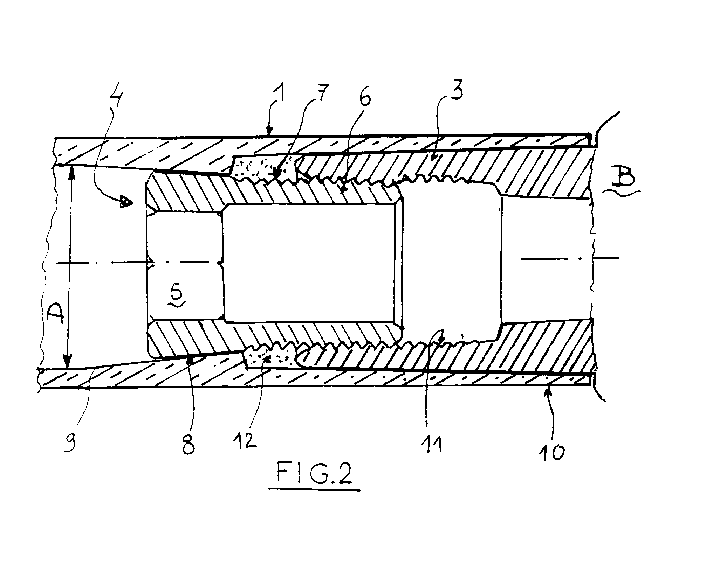

Différentes formes de mise en oeuvre du procédé conforme à l'invention peuvent être envisagées. Selon une forme préférentielle illustrée par la figure 2, forme selon laquelle l'élément tubulaire (1) est emmanché autour de la portée (3) du boitier B, l'emmanchement de ces deux éléments étant réalisé soit concentriquement soit en prévoyant une légère pente similaire à un emboitement du type cône Morse bien connu dans le domaine de la mécanique, c'est-à-dire un emmanchement ayant une conicité de 1/20 environ et qui permet d'obtenir non seulement un centrage, mais un excellent blocage, l'élément additionnel (4) se présente essentiellement sous la forme d'un "bouchon" dont la partie accessible ou "tête" (5) depuis extérieur du tube (1) présente un évidement (par exemple à six pans creux) pour pouvoir l'actionner, et la partie aval ou "tige de liaison" (6) présente une zone filetée (7). L'élément additionnel ou bouchon (4) est introduit à l'intérieur du tube (1) de telle sorte que la surface périphérique (8) de la tête (5) vienne prendre appui et plaquer contre l'intérieur de la surface (9) du tube (1) qui se présente sous la forme d'une couronne périphérique de plus faible diamètre que le diamètre D dudit tube (1). Cette couronne périphérique est, dans la forme de réalisation illustrée à la figure 2, constituée par une partie tronconique obtenue par moulage lors de la réalisation dudit tube (1) et dont la section va en décroissant vers l'extrémité (10) du tube. La tige de liaison (6) du raccord additionnel (3) vient, quant à elle, se visser à l'intérieur d'une partie complémentaire (11) formée dans le raccord (3) du boitier B. Lors de la mise en place du raccord additionnel (4), la colle préalablement déposée tend à fluer et à venir s'insinuer entre les filets ainsi que dans la zone (12) comprise entre les différents éléments, ce qui après prise définitive, entraîne une immobilisation définitive non seulement du tube (1) avec le manchon (3), mais également du raccord (4) avec les deux éléments précités.

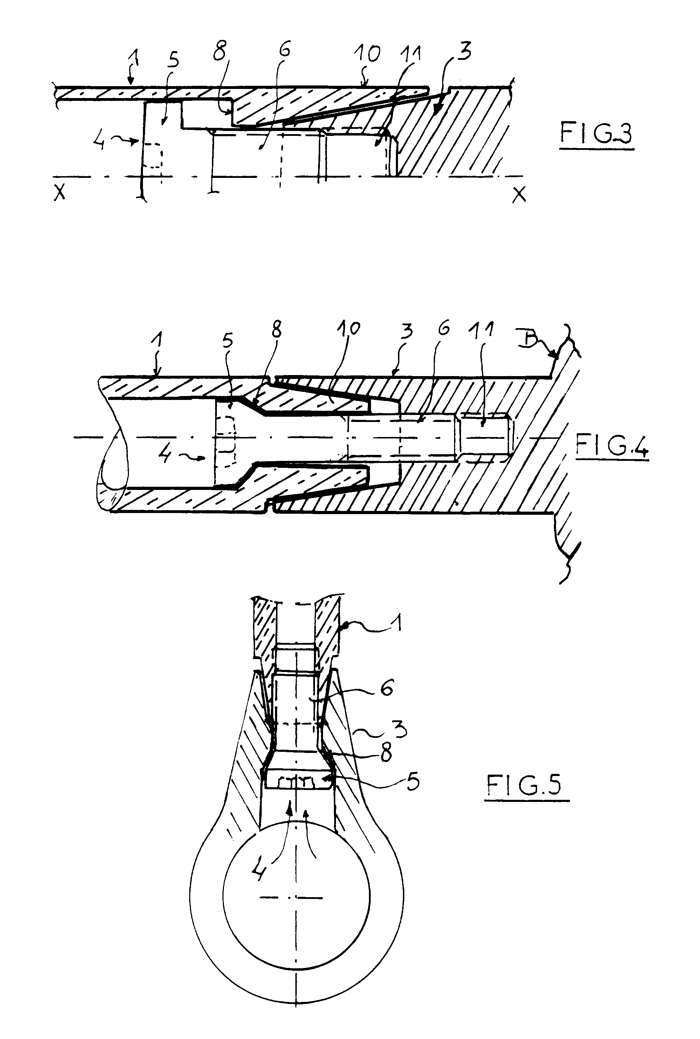

La figure 3 illustre une variante du mode de raccordement illustré à la figure 2 dans lequel le tube (1) est également emmanché autour du raccord de liaison (3). Dans cette variante, la tête (5) vient plaquer non pas contre un plan incliné (8) formé à l'intérieur du tube (1), mais contre une couronne interne, désignée également par la référence (8) et située orthogonalement par rapport à l'axe XX de l'ensemble.

La figure 4 illustre une autre forme de mise en oeuvre du procédé selon l'invention dans lequel l'emmanchement du tube (1) est réalisé non pas autour du raccord (3), mais à l'intérieur de ce dernier.

Comme précédemment, la liaison définitive du tube et du raccord est obtenue au moyen d'un raccord additionnel (4) dont une partie vient plaquer contre l'intérieur de la surface de l'élément à l'intérieur duquel il a été introduit (dans le cas présent le tube), et dont l'autre partie vient se visser à l'intérieur du second élément.

Il a été constaté, par rapport aux solutions antérieures faisant appel soit uniquement au collage, soit uniquement au vissage, qu'un tel assemblage présentait des caractéristiques de résistance à l'arrachement, à la compression nettement améliorées et qu'il était pratiquement impossible de désolidariser le tube de boitier support.

Par ailleurs, s'il est préférable de réaliser la mise en place du raccord additionnel par introduction à l'intérieur de l'élément tubulaire, il est possible, bien entendu en fonction de la disposition des tubes par rapport aux raccords principaux, d'envisager d'effectuer cette mise en place en passant à l'intérieur desdits raccords, le raccord additionnel venant alors se visser dans un filetage complémentaire formé à l'extrémité du tube. Une telle possibilité est illustrée par la figure 5.

## Revendications

1. Procédé de raccordement et d'assemblage d'éléments tubulaires selon lequel la liaison des différents tubes (1) entre eux est obtenue au moyen de raccords ou manchons (2), les extrémités (10-3) de ces deux éléments étant emboitées l'une à l'intérieur de l'autre et la liaison étant obtenue par collage, et selon lequel après emmanchement des deux pièces l'une à l'intérieur de l'autre et avant prise de la colle, on monte un raccord additionnel (4) dont une partie (5) vient plaquer contre une surface (8) d'un élément, et dont l'autre partie (6) vient se visser avec le second élément, la prise définitive de la colle étant réalisée après mise en place de cet élément de jonction additionnel, caractérisé en ce que ledit raccord additionnel (4) est introduit à l'intérieur de l'un des éléments, une partie (5) du raccord (4) venant plaquer contre une surface (8) à l'intérieur de cet élément et l'autre partie (6) venant se visser à l'intérieur du second élément.

2. Procédé selon la revendication 1, caractérisé en ce que le raccord additionnel (4) est introduit à l'intérieur de l'élément tubulaire (1) et vient se visser à l'intérieur du raccord (3) proprement dit.

3. Procédé selon la revendication 1, caractérisé en ce que lorsque le tube (1) est emmanché à l'extérieur du raccord (3), cet emmanchement étant soit cylindrique, soit légèrement conique, la tête (5) de l'élément de raccordement additionnel (4) vient plaquer contre une surface (8) formant butée.

4. Procédé selon la revendication 3, caractérisé en ce que la surface (8) formant butée se présente sous la forme d'un plan incliné ou sous la forme d'une couronne orthogonale à l'axe XX de liaison.

5. Cadre de bicyclette dont les éléments tubulaires qui le composent sont raccordés entre eux au moyen de manchons, et dans lequel au moins au niveau du boitier de pédalier, au moins une partie des tubes qui composent ledit cadre sont reliés entre eux par emmanchement et collage, un élément additionnel de blocage (4) étant monté, dont une partie vient plaquer contre une surface d'un élément, et dont l'autre partie (6) vient se visser au second élément, caractérisé en ce que ledit élément additionnel de blocage (4) est introduit à l'intérieur de l'un des éléments, une partie (5) de cet élément venant plaquer contre l'intérieur de la surface de l'élément à l'intérieur duquel il est introduit et l'autre partie (6) venant se visser à l'intérieur du second élément.

## Claims

1. Process for connecting and assembling tubular elements according to which the various tubes (1) are joined to one another by means of connectors or sleeves (2), the ends (10-3) of these two elements being fitted together one inside the other and the bond being obtained by an adhesive, and wherein, after fitting the two members one inside the other and before the adhesive has set, an additional connector (4) is mounted a part (5) of which being pressed against a surface (8) of an element, and another part (6) of said additional connector being screwed with the second element, the final setting of the adhesive taking place after installation of this additional joining element, characterized in that the said additional connector (4) is introduced inside of one of the elements, a part(s) of said connector being pressed against a surface inside of said element and another part (6) being screwed inside the second element.

2. Process according to the claim 1 characterized in that the additional connector (4) is introduced inside the tubular element (1) and is screwed inside the actual connector (3).

3. Process according to the claim 1, characterized in that when the tube (1) is fitted outside the connector (3), this jointing being either cylindrical or slightly conical, the head (5) of the additional connecting element (4) is pressed against a surface (8) forming a stop.

4. Process according to the claim 3, characterized in that the surface (8) forming a stop takes the form of an inclined plane or the form of a collar orthogonal to the joining axis XX.

5. A bicycle frame, the tubular elements constituting it being connected to one another by means of sleeves, and in which at least in the region of the bottom bracket housing, at least one part of the tubes constituting said frame are joined to one another by fitting together and adhesive bonding, an additional locking element (4) being mounted, a part of this element being pressed against a surface of an element and another part (6) being screwed with the second element, characterized in that the said additional connector (4) is introduced inside of one of the elements, a part(s) of said connector being pressed against a surface inside of said element and another part (6) being screwed inside the second element.

## Patentansprüche

1. Verfahren zur Verbindung und zum Zusammensetzen Von Rohrelementen, bei dem die Verbindung der verschiedenen Rohre (1) untereinander mit Hilfe Von Verbindungsabschnitten oder Hülsen (2) erreicht wird, wobei die Enden (10 - 3) dieser beiden Elemente ineinander eingeschoben sind und die Verbindung durch eine Klebung erreicht wird, und bei der nach dem Einstecken der beiden Teile ineinander und vor dem Trocknen des Klebers ein zusätzlicher Verbindungsabschnitt (4) angeordnet wird, dessen einer Abschnitt (5) sich gegen eine Oberfläche (8) des einen Elementes legt und dessen anderer Abschnitt (6) sich auf das zweite Element aufschraubt, wobei das endgültige Trocknen des Klebers nach der Anordnung dieses zusätzlichen Verbindungselementes durchgeführt wird, **dadurch gekennzeichnet,** daß der zusätzliche Verbindungsabschnitt (4) im Innern eines der Elemente eingeführt wird und daß sich ein Abschnitt (5) des Verbindungsabschnittes (4) gegen eine Oberfläche (8) im Innern dieses Elementes legt und der andere Abschnitt (6) im Innern des zweiten Elementes eingeschraubt wird.

2. Verfahren nach Anspruch 1, dadurch gekennzeichnet, daß der zusätzliche Verbindungsabschnitt (4) in das Innere des Rohrelementes (1) eingeführt wird und im Innern des eigentlichen Verbindungsabschnittes (3) eingeschraubt wird.

3. Verfahren nach Anspruch 1, dadurch gekennzeichnet, daß bei einem Aufschieben des Rohrs (1) von außen auf den Verbindungsabschnitt (3) das Einsteckende entweder zylindrisch oder leicht konisch ist, wobei der Kopf (5) des zusätzlichen Verbindungselementes (4) gegen eine Oberfläche (8) zu liegen kommt, die einen Anschlag bildet.

4. Verfahren nach Anspruch 3, dadurch gekennzeichnet, daß die einen Anschlag bildende Oberfläche (8) in Gestalt einer geneigten Ebene oder in Gestalt eines Kranzes, der rechtwinklig zu der XX-Verbindungsachse steht, ausgebildet ist.

5. Fahrradrahmen, bei dem die ihn bildenden Rohrelemente untereinander mit Hilfe von Hülsen verbunden sind und bei dem mindestens im Bereich des Tretlagergehäuses mindestens ein Abschnitt der den Rahmen bildenden Rohre untereinander durch Ineinanderschieben und Klebung verbunden sind, wobei ein zusätzliches Klemmelement (4) angeordnet ist, dessen eine Seite sich gegen eine Oberfläche eines Elementes legt und dessen anderer Abschnitt (6) mit dem zweiten Element verschraubt ist, **dadurch gekennzeichnet,** daß das zusätzliche Klemmelement (4) im Innern eines der Elemente eingeführt ist und daß sich ein Abschnitt (5) dieses Elementes gegen das Innere der Oberfläche des Elementes legt, in das es eingeführt ist, und der andere Abschnitt (6) im Innern des zweiten Elementes eingeschraubt ist.
